# EUROPÄISCHE PATENTANMELDUNG

(11) **EP 0 967 099 A2**
(43) Veröffentlichungstag der Anmeldung: **29.12.1999**
(21) Anmeldenummer: 99112313.4
(22) Anmeldetag: 26.06.1999
(51) Int. Cl.: B60J 7/043, B60J 7/057

(54) **Vorrichtung zur Bestätigung eines Hebe-Schiebedaches**

(30) Priorität: 26.06.1998 DE 19828464
(71) Anmelder: WEBASTO KAROSSERIESYSTEME GmbH, D-82131 Stockdorf (DE)
(72) Erfinder: Kronseder, Robert, 84432 Hohenpolding (DE); Miklosi, Stefan, 81247 München (DE); Stenvers, Jürgen, 81375 München (DE)
(74) Vertreter: Wiese, Gerhard

(57) **Zusammenfassung**

Die Erfindung betrifft eine Vorrichtung zur Betätigung eines Hebe-Schiebedaches mit einem Deckel (13), der mit einer wenigstens eine Führungsbahn (6A, 6B) aufweisenden Deckelkulisse (4) verbunden ist, in welche ein Ausstellmechanismus für das Hochstellen der Deckelhinterkante (13B) eingreift und der mittels einer Zahnstangen/Ritzel-Verbindung nach hinten über das feste Dach (14) eines Fahrzeugs verschiebbar ist. Für eine stabile, klapperfreie Führung des Deckels (13) ist der Ausstellmechanismus mit einem Ausstellhebel (3) versehen, dessen eines Ende mit einer Schwenkachse (2) schwenkbar an einem dachfesten Teil (1) gelagert ist und an dessen anderem Ende zwei einen unterschiedlichen Abstand von der Schwenkachse (2) aufweisenden Führungsorgane (3A, 3B) angeordnet sind, die jeweils in eine unterschiedlich geneigte Führungsbahn (6A, 6B) der Deckelkulisse (4) eingreifen.

## Beschreibung

Die Erfindung betrifft eine Vorrichtung zur Betätigung eines Hebe-Schiebedaches mit einem Deckel, der mit einer wenigstens eine Führungsbahn aufweisenden Deckelkulisse verbunden ist, in welche ein Ausstellmechanismus für das Hochstellen der Deckelhinterkante eingreift, und der mittels einer Zahnstangen/Ritzel-Verbindung nach hinten über das feste Dach eines Fahrzeugs verschiebbar ist.

Bei einer aus der DE 41 01 288 A1 bekannten Vorrichtung zur Betätigung eines Hebe-Schiebedaches bzw. Spoilerdaches greift ein an einem Ausstellhebel gelagertes Ritzel in eine mit dem Deckel verbundene Zahnstange ein, wodurch der Deckel in einer ersten Bewegungsphase aufgestellt und in einer zweiten Phase nach hinten über das feste Dach verschoben wird. Dadurch, daß das Ritzel und die Zahnstange den einzigen Eingriff zur Führung des Deckels in dessen hinterem Bereich bilden, neigt ein derartiges Dach aufgrund des erforderlichen Spiels zwischen Ritzel und Zahnstange zum Klappern.

Es ist Aufgabe der vorliegenden Erfindung, eine Vorrichtung zur Betätigung eines Hebe-Schiebedaches zu schaffen, die eine sichere, klapperfreie Führung des Deckels ermöglicht.

Diese Aufgabe wird gemäß der vorliegenden Erfindung dadurch gelöst, daß der Ausstellmechanismus einen Ausstellhebel aufweist, dessen eines Ende mit einer Schwenkachse schwenkbar an einem dachfesten Teil gelagert ist und an dessen anderem Ende zwei einen unterschiedlichen Abstand von der Schwenkachse aufweisende Führungsorgane angeordnet sind, die jeweils in eine unterschiedlich geneigte Führungsbahn der Deckelkulisse eingreifen. Weitere vorteilhafte Ausgestaltungen der Erfindung sind den Unteransprüchen zu entnehmen.

Durch den Eingriff von zwei Führungsorganen in unterschiedlich geneigte Führungsbahnen der Deckelkulisse wird zum einen ein sicherer Eingriff zwischen Ausstellvorrichtung und Deckel gewährleistet und zum anderen ermöglicht die unterschiedliche Neigung der Führungsbahnen auch einen unterschiedlichen Ausstellwinkel des Deckels in den verschiedenen Betriebspositionen.

Für die Betätigung in Verschieberichtung ist vorzugsweise am Ausstellhebel wenigstens ein mit einem Antrieb verbundenes Ritzel gelagert, das mit einer am Deckel gelagerten Zahnstange im Eingriff steht.

Für eine symmetrische Krafteinleitung zwischen Ausstellhebel und Deckel ist es vorteilhaft, wenn der Ausstellhebel als Gabelhebel mit zwei voneinander beabstandeten Schenkeln ausgebildet ist. In diesem Falle sind die Führungsorgane jeweils vorzugsweise an den Außenseiten der Schenkel angeordnet.

Zwischen den Schenkeln des Ausstellhebels sind dann vorzugsweise das bzw. die Ritzel für den Eingriff in die deckelfeste Zahnstange gelagert. Vorzugsweise sind dabei zwei Ritzel in koaxialer Anordnung vorgesehen, von denen jedes mit einer Zahnstange im Eingriff steht.

Zwischen den Ritzeln ist vorzugsweise ein mit diesen in Antriebsverbindung stehendes oberes Antriebsrad angeordnet.

Damit der Antrieb nicht - wie beim eingangs zitierten Stand der Technik - gemäß DE 41 01 288 A1 - an einem mitschwenkenden Teil angeordnet sein muß, ist bei der vorliegenden Erfindung vorzugsweise vorgesehen, daß das obere Antriebsrad in kraftschlüssiger Verbindung mit einem unteren Antriebsrad steht, das im Bereich der Schwenkachse des Ausstellhebels angeordnet ist. Die Antriebskräfte können somit im Bereich der ortsfest bleibenden Schwenkachse des Aussteilhebels eingeleitet werden. Die Verbindung des oberen und des unteren Antriebsrades erfolgt vorzugsweise mittels eines Zahnriemens.

Vorzugsweise ist eine einzige Vorrichtung mit einem Ausstellmechanismus im Bereich der Mittellängsachse des Deckels angeordnet. Falls die Antriebskräfte mittels eines weiteren Zahnriemens von einer im vorderen Bereich des Daches angeordneten Kurbel zum Ausstellmechanismus nach hinten übertragen werden müssen, ist dabei zweckmäßigerweise im Bereich der Mittellängsachse eine Strebe des Dachrahmens vorgesehen. Alternativ dazu ist es jedoch ebenso gut möglich, die Ausstell- und Verschiebevorrichtung vom hinteren Teil des Daches her anzutreiben, wobei dann eine Mittelstrebe entfallen kann. Gemäß einer weiteren Alternative ist es auch möglich, zwei Ausstellmechanismen zu beiden Seiten der Deckelhinterkante vorzusehen, wobei diese entweder jeweils beide Führungsorgane für einen Eingriff mit unterschiedlich geneigten Führungsbahnen einer Deckelkulisse aufweisen oder der Ausstellmechanismus zu einer Seite der Deckelhinterkante weist lediglich ein einziges Führungsorgan auf und die Deckelkulissen zu beiden Seiten des Deckels sind jeweils mit einer Führungsbahn unterschiedlicher Neigung ausgestattet.

Schließlich ist vorzugsweise vorgesehen, daß der Deckel mit Führungselementen nahe seiner Vorderkante in dachfesten seitlichen Führungen geführt ist, die im vorderen Bereich einen abgesenkten Bahnabschnitt aufweisen. Durch das Auflaufen der Führungselemente auf den relativ zum abgesenkten Bahnabschnitt höheren hinteren Teil der Führung wird beim Verschieben des Deckels nach hinten eine flachere Neigung des Deckels bewirkt, wodurch ein geringerer Widerstand gegen den Fahrtwind erreicht wird.

Nachfolgend ist ein Ausführungsbeispiel der Erfindung anhand der Zeichnungen beschrieben. Es zeigt:
Fig. 1 eine schematische perspektivische Ansicht eines Fahrzeugdaches,
Fig. 2 einen Längsschnitt durch ein Fahrzeugdach in Schließposition,
Fig. 3 einen Längsschnitt durch das Dach bei ausgestellter Deckelhinterkante,
Fig. 4 einen Längsschnitt durch das Dach mit nach hinten verschobenem Deckel und
Fig. 5 einen Schnitt durch den Ausstellmechanismus gemäß der Schnittlinie V-V in Fig. 4.

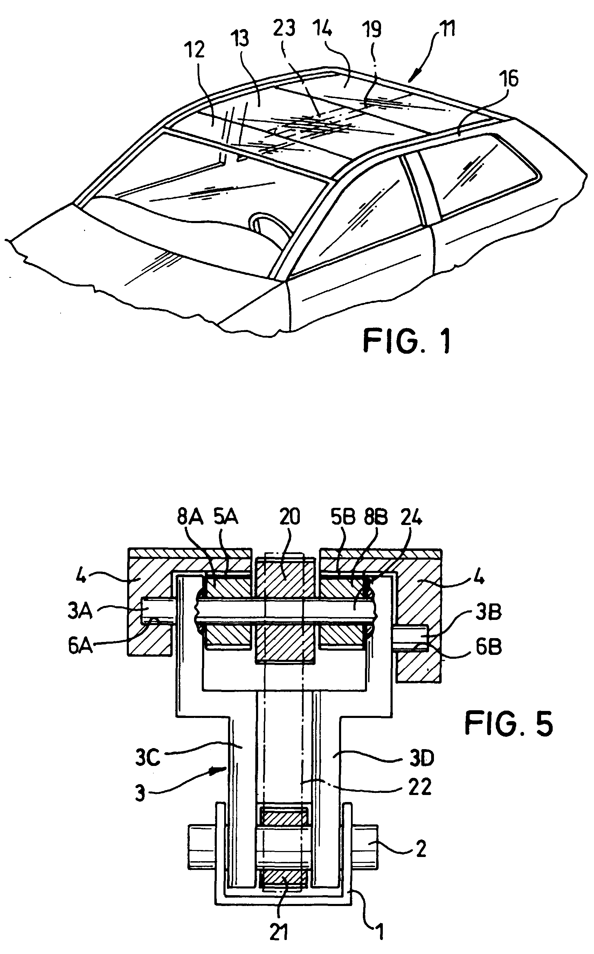

Das in Fig. 1 dargestellte Fahrzeugdach 11 weist einen festen vorderen Dachabschnitt 12, einen festen hinteren Dachabschnitt 14 sowie ein dazwischen angeordnetes Hebe-Schiebedach bzw. Spoilerdach mit einem Deckel 13 auf Das Dach wird zu beiden Seiten durch Seitenholme 16 begrenzt. Im Bereich der Mittellängsachse 19 des Daches ist optional eine Mittelstrebe 23 mit strichpunktierten Linien angedeutet, welche erforderlich ist, wenn der im folgenden beschriebene Ausstellmechanismus des Deckels 13 in zentraler Lage unterhalb der Hinterkante des Deckels 13 angeordnet und zusätzlich über eine Antriebsverbindung, wie beispielsweise einem Zahnriemen mit einer Kabel verbunden ist, die unterhalb des vorderen festen Dachteils 12 angeordnet ist. In diesem Falle wird die Mittelstrebe 23 für die Abdeckung der Antriebsverbindung benötigt. Falls der Ausstellmechanismus unmittelbar vom hinteren Bereich des festen Daches 14 her angetrieben wird, erübrigt sich diese Mittelstrebe 23.

Der Deckel 13 ist an seiner Unterseite mit einer Deckelkulisse 4 verbunden, die entweder in zentraler Lage im Bereich der Mittellängsachse 19 angeordnet ist, oder die auch alternativ dazu zu beiden Seiten des Deckels 13 angeordnet sein kann. Das im folgenden beschriebene Ausführungsbeispiel bezieht sich auf eine zweiteilige Deckelkulisse 4, die in zentraler Lage des Deckels 13 angeordnet ist. Die Deckelkulisse 4 weist zwei Führungsbahnen 6A bzw. 6B auf, die eine unterschiedliche Neigung aufweisen. Während die Führungsbahn 6A einen geraden Verlauf hat, weist die Führungsbahn 6B im hinteren Bereich des Deckels einen schräg nach hinten unten abgewinkelten Bahnabschnitt auf, daran anschließend nach vorne einen Bahnabschnitt, der parallel zur geraden Führungsbahn 6A ist und schließlich noch weiter nach vorne einen schräg nach vorne unten geneigten Bahnabschnitt.

In diese Führungsbahnen 6A bzw. 6B greifen Führungsorgane, die als Bolzen 3A bzw. 3B ausgebildet sind, ein. Die Bolzen 3A bzw. 3B sind zu beiden Seiten eines Ausstellhebels 3 angeordnet, der - wie aus Fig. 5 zu ersehen - als Gabelhebel mit zwei Schenkeln 3C bzw. 3D ausgebildet ist, wobei der in Fig. 5 linke Schenkel 3C den Bolzen 3A und der in Fig. 5 zur rechten Seite angeordnete Schenkel 3D den Bolzen 3B an seiner Außenseite trägt. Im unteren Bereich ist der Aussteilhebel 3 mittels einer Schwenkachse 2 an einem dachrahmenfest angeordneten Lagerbock 1 gelagert.

Eine Schwenkachse 2, die zur Lagerung des Ausstellhebels 3 am Lagerbock 1 dient, dient zugleich als Antriebswelle für ein zwischen den Schenkeln 3C bzw. 3D des Ausstellhebels 3 angeordnetes, mit der Schwenkachse 2 drehfest verbundenes unteres Antriebsrad 21 (Fig. 5). Das untere Antriebsrad 21 ist über einen Zahnriemen 22 mit einem oberen Antriebsrad 20 verbunden, das auf einer Welle 24 drehfest angeordnet ist, die im oberen Bereich zwischen den Schenkeln 3C bzw. 3D des Antriebshebels 3 gelagert ist. Auf der Welle 24 sitzen zu beiden Seiten des oberen Antriebsrades 20 zwei Ritzel 8A bzw. 8B zwischen den Schenkeln 3C bzw. 3D, von denen jedes mit einer Zahnstange 5A bzw. 5B im Eingriff steht, welche deckelfest angeordnet sind. Die Zahnstangen 5A bzw. 5B können unmittelbar an der Unterseite des Deckels 13 angeklebt sein oder, wie in Fig. 5 gezeigt, an den Deckelkulissen 4 direkt ausgebildet oder an diesen befestigt sein.

Somit werden die Antriebskräfte für die Betätigung des Ausstell- und Verschiebemechanismus über ein nicht dargestelltes, außen auf der Schwenkachse 2 angeordnetes Ritzel in das untere Antriebsrad 21 eingeleitet, vom Zahnriemen 22 auf das obere Antriebsrad 20 übertragen und von dort über die Welle 24 und die Ritzel 8A bzw. 8B auf die Zahnstangen 5A bzw. 5B weitergeleitet. An Stelle eines Ritzels kann an der Schwenkachse 2 auch unmittelbar beispielsweise ein elektrischer Anrieb angreifen, der im hinteren Bereich am Dachrahmen 25 gelagert ist.

Der Deckel 13 ist im Bereich seiner Vorderkante 13A zu beiden Seiten mittels einer vorderen Deckelstütze 9 und an dieser angeordneten Führungselementen 10 in einer zu beiden Seiten des Deckels am Dachrahmen 25 angeordneten Führungsbahn 18 geführt, die im vorderen Bereich einen abgesenkten Bahnabschnitt 18A aufweist.

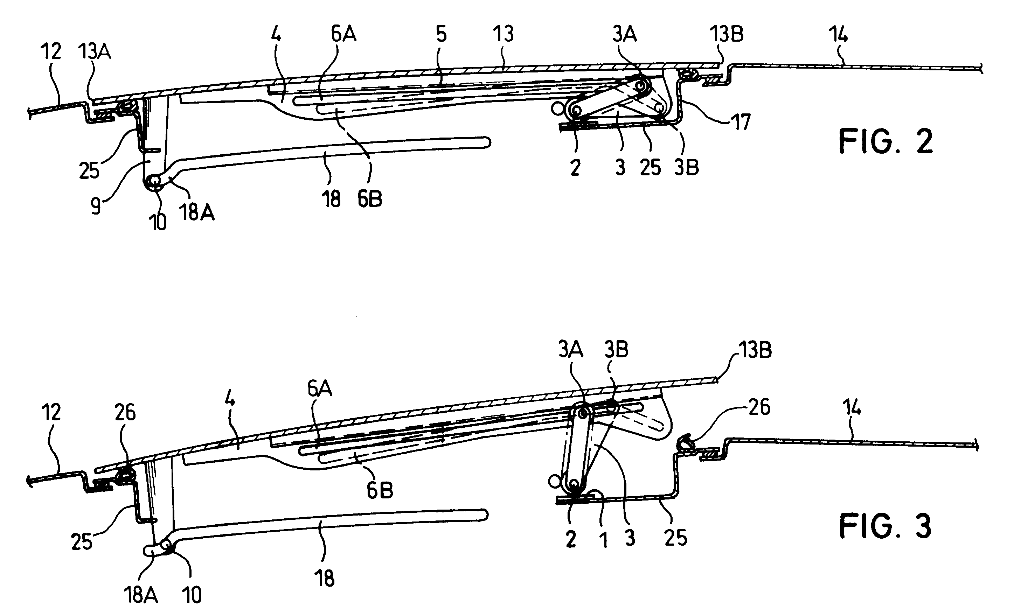

In der Schließposition gemäß Fig. 2 befindet sich das Führungselement 10 am vorderen Ende des abgesenkten Bahnabschnitts 18A. Der Ausstellhebel 3 ist in dieser Position (Fig. 2) nach hinten abgelegt. Bei der Ausstellbewegung der Hinterkante 13B des Deckels gemäß Fig. 3 wird der Ausstellhebel 3 im Gegenuhrzeigersinn durch Einleitung der Antriebskräfte im Bereich der Schwenkachse 2 über das untere Antriebsrad 21, den Zahnriemen 22, das obere Antriebsrad 20, die Ritzel 8A, 8B auf die Zahnstangen 5A bzw. 5B aufgestellt. Dabei wandert der Bolzen 3B vom hinteren Ende der Führungsbahn 6B über den schräg nach hinten unten geneigten Bahnabschnitt bis in den parallel zur Führungsbahn 6A angeordneten Bahnabschnitt der Führungsbahn 6B. Der Bolzen 6A bewegt sich analog dazu in der Führungsbahn 6A nach vorne. Das vordere Führungselement 10 bewegt sich geringfügig vom abgesenkten Bahnabschnitt 18A im Bereich von dessen schräg nach hinten ansteigender Rampe auf den geraden Führungsbahnabschnitt 18 zu. Der Deckel 13 erreicht dabei seine maximale Schrägstellung, sodaß die Deckelkulisse 4 mit ihrem hinteren Ende über eine Dichtung 26 im hinteren Bereich des Dachrahmens 25 bei der nachfolgenden Verschiebung des Deckels 13 nach hinten geführt wird.

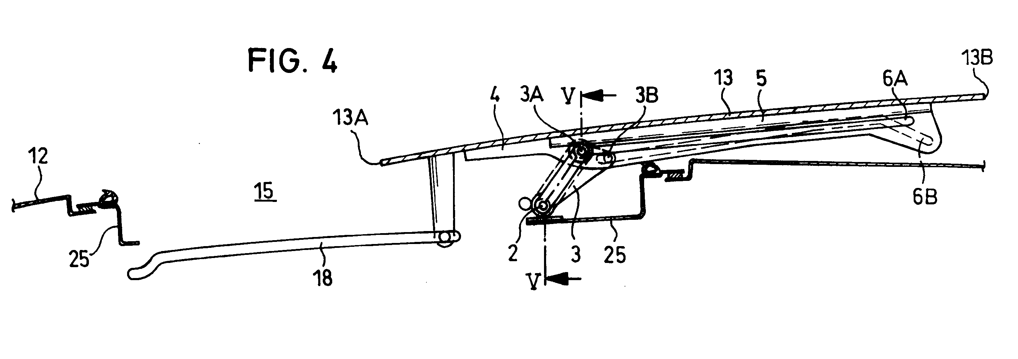

In Fig. 4 ist der Deckel 13 in seiner maximal nach hinten verschobenen Position dargestellt. Dabei wird ein großer Teil der Dachöffnung 15 freigelegt. Die Bolzen 3A und 3B sind dabei bis zum vorderen Ende der Führungsbahnen 6A bzw. 6B gewandert und das Führungselement 10 ist im geraden Teil der Führungsbahn 18 zu deren hinterem Ende gewandert. Durch den schräg nach vorne abfallenden Bahnabschnitt der Führungsbahn 6B und durch das Ansteigen des Führungselementes 10 vom abgesenkten Bahnabschnitt 18A in den geraden Bahnabschnitt 18 hat der Deckel in der nach hinten verschobenen Position eine flachere Neigung als in der ausgestellten Position gemäß Fig. 3. Hierdurch werden die am Deckel 13 angreifenden Windkräfte reduziert.

### Bezugszeichenliste

- 1: Lagerbock
- 2: Schwenkachse
- 3: Ausstellhebel
- 3A: Bolzen
- 3B: Bolzen
- 3C: Schenkel
- 3D: Schenkel
- 4: Deckelkulisse
- 5A: Zahnstange
- 6A: Zahnstange
- 8A: Ritzel
- 8B: Ritzel
- 9: vordere Deckelstütze
- 10: Führungselement (Gleiter)
- 11: festes Fahrzeugdach
- 12: vordere Dachfläche
- 13: Deckel
- 13A: Vorderkante
- 13B: Hinterkante
- 14: hintere Dachfläche
- 15: Dachöffnung
- 16: Seitenholm
- 17: Dachrahmen
- 18: dachfeste Führung
- 18A: abgesenkter Bahnabschnitt
- 19: Mittel-Längsachse
- 20: oberes Antriebsrad
- 21: unteres Antriebsrad
- 22: Zahnriemen
- 23: Mittelstrebe
- 24: Welle
- 25: Dachrahmen
- 26: Dichtung

## Patentansprüche

1. Vorrichtung zur Betätigung eines Hebe-Schiebedaches mit einem Deckel (13), der mit einer wenigstens eine Führungsbahn (6A bzw. 6B) aufweisenden Deckelkulisse (4) verbunden ist, in welche ein Ausstellmechanismus für das Hochstellen der Deckelhinterkante (13B) eingreift, und der mittels einer Zahnstangen/Ritzelverbindung (5A, 5B bzw. 8A, 8B) nach hinten über das feste Dach (Abschnitt 14) eines Fahrzeugs verschiebbar ist, **dadurch gekennzeichnet**, daß der Ausstellmechanismus einen Ausstellhebel (3) aufweist, dessen eines Ende mit einer Schwenkachse (2) schwenkbar an einem dachfesten Teil (Lagerbock 1) gelagert ist und an dessen anderem Ende zwei einen unterschiedlichen Abstand von der Schwenkachse (2) aufweisenden Führungsorgane (Bolzen 3A und 3B) angeordnet sind, die jeweils in eine unterschiedlich geneigte Führungsbahn (6A bzw. 6B) der Deckelkulisse (4) eingreifen.

2. Vorrichtung nach Anspruch 1, **dadurch gekennzeichnet**, daß am Ausstellhebel (3) wenigstens ein mit einem Antrieb verbundenes Ritzel (8A bzw. 8B) gelagert ist, das mit einer am Deckel (13) gelagerten Zahnstange (5A bzw. 5B) in Eingriff steht.

3. Vorrichtung nach Anspruch 1 oder 2, **dadurch gekennzeichnet**, daß der Ausstellhebel (3) als Gabelhebel mit zwei voneinander beabstandeten Schenkeln (3C und 3D) ausgebildet ist.

4. Vorrichtung nach Anspruch 3, **dadurch gekennzeichnet**, daß an den Außenseiten der Schenkel (3C und 3D) je eines der Führungsorgane (Bolzen 3A und 3B) angeordnet ist.

5. Vorrichtung nach einem der Ansprüche 3 und 4, **dadurch gekennzeichnet**, daß zwischen den Schenkeln (3C und 3D) des Ausstellhebels (3) das bzw. die Ritzel (8A bzw. 8B) gelagert sind.

6. Vorrichtung nach Anspruch 5, **dadurch gekennzeichnet**, daß zwei Ritzel (8A und 8B) in koaxialer Anordnung vorgesehen sind, von denen jedes mit einer Zahnstange (5A bzw. 5B) in Eingriff steht.

7. Vorrichtung nach Anspruch 6, **dadurch gekennzeichnet**, daß zwischen den Ritzeln (8A und 8B) ein mit diesen in Antriebsverbindung stehendes oberes Antriebsrad (20) angeordnet ist.

8. Vorrichtung nach Anspruch 7, **dadurch gekennzeichnet**, daß das obere Antriebsrad (20) in kraftschlüssiger Verbindung mit einem unteren Antriebsrad (21) steht, das im Bereich der Schwenkachse (2) des Ausstellhebels (3) angeordnet ist.

9. Vorrichtung nach Anspruch 8, **dadurch gekennzeichnet**, daß die beiden Antriebsräder (20 und 21) mittels eines Zahnriemens (22) verbunden sind.

10. Vorrichtung nach einem der vorhergehenden Ansprüche, **dadurch gekennzeichnet**, daß ein Ausstellmechanismus im Bereich der Mittellängsachse (19) des Deckels (13) angeordnet ist.

11. Vorrichtung nach einem der vorhergehenden Ansprüche, **dadurch gekennzeichnet**, daß der Deckel (13) mit Führungselementen (10) nahe seiner Vorderkante (13A) in dachfesten Führungsbahnen (18) geführt ist, die im vorderen Bereich einen abgesenkten Bahnabschnitt (18A) aufweisen.
